# FASCICULE DE BREVET EUROPEEN

(11) **EP 2 742 089 B1**
(45) Date de publication et mention de la délivrance du brevet: **07.10.2015**
(21) Numéro de dépôt: 12745856.0
(22) Date de dépôt: 09.08.2012
(51) Int. Cl.: C08J 3/21, C08F 8/30, C08F 8/32, C08G 81/02, C04B 24/26, C08F 8/14, C08F 8/44, C08K 5/00

(54) **POLYMERES DISPERSANTS À STABILITÉ THERMIQUE AMÉLIORÉE**
DISPERGIERPOLYMERE MIT VERBESSERTER THERMISCHER STABILITÄT
DISPERSING POLYMERS WITH IMPROVED THERMAL STABILITY

(30) Priorité: 11.08.2011 FR 1157306
(43) Date de publication de la demande: 18.06.2014
(73) Titulaire: Chryso, 92440 Issy-Les-Moulineaux (FR)
(72) Inventeur: DESSEROIR, Alexandre, 28700 Chatenay (FR); MAITRASSE, Philippe, F-45170 Chilleurs aux Bois (FR); LEMAIRE, Marc, F-69100 Villeurbanne (FR); POPOWYCZ, Florence, 69003 Lyon (FR); LABOURT-IBARRE, Pierre, F-69006 Lyon (FR)
(74) Mandataire: Domenego, Bertrand
(86) Numéro de dépôt international: PCT/EP2012/065581
(87) Numéro de publication internationale: WO 2013/021029

(56) Documents cités:
- EP-B1- 1 124 892
- WO-A1-2009/090471
- WO-A1-2011/015761
- FR-A1- 2 900 930

## Description

### [Domaine technique]

La présente invention concerne le domaine des polymères utiles en particulier à titre de dispersants pour suspensions aqueuses de particules minérales, en particulier les liants hydrauliques, un procédé pour leur préparation, les polymères susceptibles d'être ainsi obtenus, l'adjuvant formulé à partir de ces polymères et leur utilisation.

### [Etat de la technique]

La découverte des propriétés dispersantes exceptionnelles des polymères peigne de type polycarboxylate polyalcoxylé (PCP) a permis la mise en oeuvre de chapes, mortiers, enduits auto-lissants et bétons à base de liants hydrauliques de plus en plus performants.

L'utilisation de ces polymères dispersants peut s'avérer délicate du fait de leur faible résistance vis-à-vis de la chaleur et des milieux oxydants. En particulier, les chaînes de polyoxyde d'alkylène tendent à se dégrader par oxydation lorsqu'elles sont exposées à des températures élevées et/ou une atmosphère oxydante. La dégradation du polymère affecte ses performances dispersantes.

Ainsi, la faible résistance thermique des polymères dispersants peut poser des problèmes lors de leur mise en poudre, par séchage en température, à partir de la solution aqueuse polymérique : dégradation du polymère, voire même, dans certaines conditions, un risque d'explosion de la poudre de polymère. La limitation de la dégradation du polymère impose des précautions onéreuses comme la mise sous gaz inerte, CO₂ ou azote, de la tour d'atomisation.

De plus, ces poudres de polymères dispersants doivent répondre aux exigences requises pour l'obtention de la « classe transport ». Ce classement, prévu par l'Accord européen sur le Transport des matières dangereuses par Route (ADR) requiert notamment un faible auto-échauffement, caractérisé par le fait qu'un échantillon cubique de 100 mm de côté présente une température de la poudre inférieure à 200°C après exposition à une température de 140°C pendant 24h.

La faible résistance thermique de ces polymères dispersants peut imposer également des contraintes particulières pour leur stockage. En effet, une perte de performance peut être observée après un stockage prolongé des polymères poudres dans un hangar où la température peut atteindre 50°C sur plusieurs semaines en été.

Enfin, la faible résistance thermique limite les possibilités d'utilisation des polymères dispersants. Ainsi, il est actuellement recherché d'ajouter le dispersant dès le broyage des liants hydrauliques, notamment du ciment, ce qui est impossible avec un polymère dispersant conventionnel qui ne résiste pas aux températures élevées et conditions oxydantes rencontrées lors de cette étape de la fabrication.

Plusieurs solutions ont été proposées afin d'améliorer la stabilité thermique des polymères dispersants de type polycarboxylates polyalcoxylés et/ou leur résistance en atmosphère oxydante.

Il est ainsi connu de EP 1 124 892 de stabiliser des poudres de polymères de type polycarboxylates polyalcoxylés en ajoutant à la solution aqueuse de ces polymères des agents anti-oxydants choisis parmi les phénols, amines, phosphites, thioéthers et thioacides, avant le séchage. Ces agents étant généralement liquides et hydrophobes, ils doivent être incorporés par émulsification.

Du fait de leur stabilité relative, ces émulsions peuvent poser des problèmes spécifiques lors du séchage. Ainsi, l'instabilité des émulsions, notamment en présence d'additifs habituels de type silice, rend la conduite du procédé délicate. On observe ainsi la formation de dépôts sur les parois de la tour d'atomisation, ce qui affecte la qualité et le rendement du procédé. L'instabilité des émulsions ne permet par ailleurs pas toujours d'assurer une répartition homogène de l'agent anti-oxydant au sein de la poudre de polymère. Par ailleurs, on ne peut exclure des pertes d'agent stabilisant par entraînement avec l'eau lors du séchage. L'ensemble de ces phénomènes entraîne des risques d'échauffement, voire d'explosion, de la poudre en partie mal protégée.

Il est également connu de WO 2011/015761 d'associer à un dispersant un agent anti-oxydant comme agent sacrificiel afin de limiter la dégradation du polymère en milieu oxydant, par exemple lors du broyage du ciment. Il est également envisagé d'intégrer certains agents sacrificiels dans le squelette du plastifiant par copolymérisation, notamment radicalaire. Ce procédé engendre un coût substantiel puisqu'il requiert une teneur d'au moins 5% en poids d'agent sacrificiel dans la composition de dispersant. Par ailleurs, le mode opératoire proposé paraît difficile à réaliser à une échelle industrielle.

De manière générale, il est en outre observé que les formulations de dispersant évoluent fréquemment avec le temps, notamment par des phénomènes tels que précipitation, coloration, viscosation, crémage, démixtion, ou mûrissement d'Ostwald.

Par ailleurs, la demande de brevet WO 2009/090471 propose de protéger un polymère polycarboxylique pendant l'étape d'estérification par ajout d'agents anti-oxydants, notamment d'une amine aromatique. Ces agents anti-oxydants n'ont pas vocation à être intégrés dans le polymère et cela paraît d'ailleurs difficile compte tenu de la réactivité des agents décrits. D'ailleurs, il a été observé que le procédé aboutit à l'obtention d'émulsions.

### [Résumé de l'invention]

Le but de l'invention est alors de proposer des polymères dispersants de type polycarboxylate polyalcoxylé présentant une stabilité améliorée vis-à-vis de la chaleur et/ou en milieu oxydant et sans les inconvénients cités.

Ce but est atteint selon l'invention par un polymère dans lequel les groupements anti-oxydants sont introduits dans le polymère PCP par une réaction de greffage. La répartition est alors homogène à l'échelle de la chaîne de polymère, lui conférant ainsi une stabilisation thermique globale améliorée.

La mise en poudre de ces polymères, par atomisation à partir de leur solution aqueuse, peut alors être réalisée sans risque. La poudre ainsi obtenue peut être classée « stable au transport ». En plus de leur excellente résistance thermique, les polymères à groupement anti-oxydants selon l'invention gardent la même efficacité dispersante.

Aussi, l'invention vise selon un premier aspect un polymère comprenant une chaîne principale hydrocarbonée portant des groupes carboxyliques et des chaînes polyalcokylées et 0,01 à 4% en poids par rapport au poids du polymère final de groupements anti-oxydants greffés à la chaîne principale.

De préférence, les groupements anti-oxydants comprennent une amine aromatique, notamment une amine portant deux substituants aromatiques, portant par ailleurs une fonction réactive permettant le greffage, tels que la 4-aminodiphénylamine.

Particulièrement préféré est un groupement issu d'un composé anti-oxydant de formule (I) suivante: 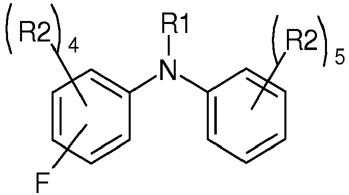 dans laquelle:
R1 est hydrogène ou une chaîne hydrocarbonée droite ou ramifiée, saturée ou insaturée, ou un ou plusieurs cycles aromatiques éventuellement condensés, comprenant 1 à 100 atomes de carbone éventuellement interrompus par un ou plusieurs hétéroatomes tels que O, S, N ou P, de préférence, R1 est hydrogène ;
R2 est identique ou différent et peut être, indépendamment les uns des autres, hydrogène ou une chaîne hydrocarbonée droite ou ramifiée, saturée ou insaturée, ou un ou plusieurs cycles aromatiques éventuellement condensés, comprenant 1 à 100 atomes de carbone, éventuellement interrompus par un ou plusieurs hétéroatomes tels que O, S, N ou P, et/ou éventuellement substitués par un ou plusieurs groupements amine, alcool, cétone, dérivé halogéné, isocyanate, acétoacétonate, silanol, ester d'acide carboxylique et d'alcool, époxyde, carbonate ou mercaptan, phosphate, phosphonate, sulfate, sulfonate ou carboxylate, de préférence, R2 est hydrogène ;
F est un groupement amine, notamment amine primaire, alcool, cétone, dérivé halogéné, isocyanate, acétoacétonate, silanol, ester d'acide carboxylique et d'alcool, époxyde, carbonate ou mercaptan lié au cycle aromatique éventuellement par une chaîne hydrocarbonée droite ou ramifiée, saturée ou insaturée comportant jusqu'à 100 atomes de carbone, de préférence, F est un groupe amine primaire.

Le composé anti-oxydant est greffé sur le polymère par réaction de la fonction réactive F avec une fonction réactive du polymère PCP. Avantageusement, le groupement anti-oxydant peut notamment être greffé sur la chaîne principale via un groupe carboxylique, au moyen d'une liaison amide ou ester. Le groupement anti-oxydant peut toutefois être également greffé par tout autre type de liaison covalente.

Le polymère greffé selon l'invention présente de préférence une masse molaire moyenne en poids (Mw) comprise entre 1000 et 1 000 000, de préférence entre 5000 et 110000.

Selon un ordre préféré, le polymère est sous forme de poudre.

Avantageusement, il comporte entre 0,1 et 4% en poids de groupements anti-oxydants, par rapport au poids du polymère.

Selon un deuxième aspect, l'invention vise un procédé de préparation d'un polymère comprenant l'étape de :
(i) l'estérification d'un composé polycarboxylique avec un alcoxypolyalcoxyglycol en présence d'un composé anti-oxydant susceptible de réagir dans les conditions de la réaction avec une fonction réactive portée par le composé polycarboxylique pour former une liaison covalente entre le composé polycarboxylique et le composé anti-oxydant.

De préférence, l'étape (i) est réalisée en deux étapes distinctes :
(a) le mélange réactionnel est d'abord porté à une température comprise entre 50 et 95°C et à pression réduite;
(b) la réaction est ensuite poursuivie en chauffant à une température comprise entre 100 et 200°C à pression réduite et/ou sous un flux de gaz inerte jusqu'à la fin de la réaction.

Par ailleurs, le procédé peut comporter en outre une étape de mise en poudre du polymère greffé obtenu.

L'étape de mise en poudre peut alors être réalisée directement à partir du polymère issu de l'étape (b). En variante, elle peut également être réalisée en réalisant les étapes de :
- mise en solution aqueuse du polymère greffé obtenu ; et
- mise en poudre de la solution de polymère obtenue, notamment par atomisation, écaillage par film mince sur tambour ou broyage.

Selon un troisième aspect, l'invention vise également un polymère susceptible d'être obtenu par le procédé décrit. De préférence, il s'agit d'un tel polymère selon l'invention sous forme de solution, notamment aqueuse, ou sous forme de poudre.

Selon un quatrième aspect, l'invention vise un adjuvant utile à titre de dispersant de suspensions de particules minérales, comprenant le polymère selon l'invention.

De préférence, l'adjuvant selon l'invention se présente sous forme de solution aqueuse limpide. Il comporte avantageusement 10 à 50% en poids de polymère ainsi que le cas échéant des additifs habituels en la matière.

Selon un cinquième aspect, l'invention vise enfin l'utilisation d'un polymère greffé décrit pour fluidifier des suspensions de particules minérales.

Selon un dernier aspect, l'invention vise l'utilisation d'un polymère greffé tel que décrit pour réduire la demande en eau de compositions hydrauliques, notamment cimentaires.

Particulièrement visée est cette dernière utilisation dans laquelle le polymère est ajouté sous forme liquide et/ou de poudre avant et/ou pendant le broyage du ciment.

### [Description détaillée de l'invention]

Dans le cadre du présent exposé, on entend par le terme « solution » couvrir des formulations liquides essentiellement monophasiques. De préférence, il s'agit de solutions limpides, tel que démontré par une mesure de turbidité réalisée au moyen d'un turbidimètre TUB 550 IR de marque WTW inférieure à 1000, de préférence inférieure à 100, et tout particulièrement inférieure à 50 voire à 10. Particulièrement visées sont des solutions aqueuses, bien qu'elles puissent également comporter des quantités minoritaires d'autres solvants.

On entend par le terme « greffage » la modification d'un polymère par réaction avec un composé différent des monomères composant le polymère de départ. A l'issue de la réaction de greffage, le composé greffé est lié au polymère par une liaison covalente, en formant un groupe latéral. L'existence d'une réaction de greffage peut être mise en évidence par l'impossibilité de récupérer du mélange réactionnel le composé greffé par des moyens de séparation physique tels que l'extraction par solvant. Le greffage du polymère peut également être mis en évidence par la détection des liaisons amide, ester ou autres ainsi formées, par exemple par l'apparition de bandes d'absorption dans les régions respectives en spectroscopie infrarouge (IR).

On entend par le terme «suspension de particules minérales » toute dispersion aqueuse d'un liant à prise hydraulique, notamment de ciments tels que les ciments Portland (CEM I et ciments aux ajouts tels que définis par la norme EN-197-1), les ciments alumineux, les sulfates de calcium anhydres ou semihydratés, les matières d'ajouts à caractère hydraulique ou pouzzolanique tels que les laitiers (tels que définis dans la norme Ciment NF EN 197-1 paragraphe 5.2.2), par exemple laitiers de haut fourneaux, les cendres volantes (telles que définies dans la norme Ciment NF EN 197-1 paragraphe 5.2.4), les pouzzolanes naturelles, les schistes calcinés (tels que définis dans la norme Ciment NF EN 197-1 paragraphe 5.2.5), les calcaires (tels que définis dans la norme Ciment NF EN 197-1 paragraphe 5.2.6) ou encore les fumées de silices (telles que définies dans la norme Ciment NF EN 197-1 paragraphe 5.2.7) ou leurs mélanges. D'autres ajouts, non actuellement reconnus par la norme Ciment NF EN 197-1 (2001), peuvent aussi être utilisés. Il s'agit notamment des métakaolins, tels que les métakaolins de type A conformes à la norme NF P 18-513, et des additions siliceuses, telles que les additions siliceuses de minéralogie Qz conformes à la norme NF P 18-509.

Le terme englobe également les charges minérales inertes telles que les granulats, sables, les sulfates de calcium dihydratés ainsi que le carbonate de calcium, ou encore la chaux hydratée la silice, l'hydroxyde de titane les composés argileux et les oxydes métalliques.

De façon plus particulière, On entend par le terme «suspension de particules minérales » toute dispersion aqueuse d'un liant à prise hydraulique, notamment de ciments tels que les ciments Portland (CEM I et ciments aux ajouts tels que définis par la norme EN-197-1), les ciments alumineux, les sulfates de calcium anhydres ou semihydratés, les matières d'ajouts à caractère hydraulique ou pouzzolanique tels que les laitiers de haut fourneaux, les cendres volantes, les pouzzolanes naturelles. Le terme englobe également les charges minérales inertes telles que les granulats, sables, les sulfates de calcium dihydratés ainsi que le carbonate de calcium, ou encore la chaux hydratée la silice, l'hydroxyde de titane les composés argileux et les oxydes métalliques.

On entend par le terme « chaîne hydrocarbonée » un groupe comportant des atomes de carbone et d'hydrogène, aliphatique, droite ou ramifiée, saturé ou insaturé, aromatique, arylalkyle ou alkylaryle, linéaire ou ramifiée. Dans le cadre de la présente invention, la chaîne hydrocarbonée est de préférence une chaîne aliphatique droite saturée.

On entend par le terme « groupement anti-oxydant » tout groupement capable lorsqu'il est présent dans des concentrations plus faibles que celles des motifs du polymère susceptibles de s'oxyder de ralentir significativement, voire d'empêcher leur oxydation (voir Handbook of Anti-oxydants, Second Edition par Lester Packer, Marcel Dekker, 2002, p [4**]**). On considérera dans le cadre de cet exposé qu'une oxydation est ralentie lorsque le temps d'induction, mesuré par calorimétrie différentielle à balayage (DSC) comme expliqué plus loin, augmente d'au moins 100%, de préférence 300%, et tout particulièrement 500% ou plus par rapport au même polymère dépourvu d'un agent anti-oxydant.

De préférence, il s'agit de groupements résultant du greffage de composés anti-oxydants comprenant une fonction amine, alcool ou phénol, et tout particulièrement d'amines aromatiques de formule I telle que définie précédemment.

On entend par le terme « composé polycarboxylique », un polymère ou copolymère porteur de plusieurs fonctions carboxyliques telles que acide carboxylique, anhydride d'acide carboxylique, et/ou éventuellement d'autres fonctions réactives telles que amine, alcool, aldéhyde, cétone, dérivé halogéné, isocyanate, acétoacétonate, silanol, ester d'acide carboxylique et d'alcool, époxyde, carbonate ou mercaptan.

Selon un premier aspect, l'invention vise un polymère comprenant une chaîne principale hydrocarbonée portant des groupes carboxyliques et des chaînes polyalcoxylés, caractérisé en qu'il comporte 0,01 à 4% en poids par rapport au poids du polymère final de groupements anti-oxydants greffés à la chaîne principale.

Les polymères selon l'invention sont dérivés de polymères dits « polymères peignes » comportant une chaîne principale hydrocarbonée d'une part et des groupes latéraux d'autre part. Plus spécifiquement, il s'agit de polycarboxylates polyalcoxylés, dits « PCP », lesquels sont caractérisés par la présence sur la chaîne principale de groupes carboxyliques, et de groupes polyoxyalkylés à titre de groupes latéraux. En addition, le polymère selon l'invention porte des groupements anti-oxydants à titre de groupes latéraux. Dans leur définition la plus large, les polymères selon l'invention sont donc des polymères de type PCP modifiés par greffage de groupements anti-oxydants.

La présence simultanée de ces trois types de groupes confère au polymère selon l'invention les propriétés intéressantes à titre d'adjuvant, notamment de dispersant pour compositions hydrauliques.

Sous réserve de ne pas interférer de manière défavorable avec la réaction d'hydratation de la composition hydraulique et, bien entendu, de freiner les réactions d'oxydation, les groupements anti-oxydants peuvent être de nature très diverse.

Il peut s'agir en particulier de groupements issus d'amines, en particulier d'amines aromatiques. Il est particulièrement préféré que les groupements anti-oxydants soient stériquement encombrés. Aussi, on préfère notamment des amines portant deux substituants aromatiques.

De manière préférée, les composés anti-oxydants utilisés pour la modification du polymère répondent à la formule (I) suivante: 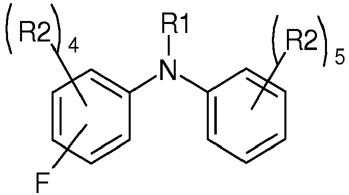 dans laquelle:
R1 est hydrogène ou une chaîne hydrocarbonée droite ou ramifiée, saturée ou insaturée, ou un ou plusieurs cycles aromatiques éventuellement condensés, comprenant 1 à 100 atomes de carbone éventuellement interrompus par un ou plusieurs hétéroatomes tels que O, S, N ou P, de préférence, R1 est hydrogène ;
R2 est identique ou différent et peut être, indépendamment les uns des autres, hydrogène ou une chaîne hydrocarbonée droite ou ramifiée, saturée ou insaturée, ou un ou plusieurs cycles aromatiques éventuellement condensés, comprenant 1 à 100 atomes de carbone, éventuellement interrompus par un ou plusieurs hétéroatomes tels que O, S, N ou P, et/ou éventuellement substitués par un ou plusieurs groupements amine, alcool, cétone, dérivé halogéné, isocyanate, acétoacétonate, silanol, ester d'acide carboxylique et d'alcool, époxyde, carbonate ou mercaptan, phosphate, phosphonate, sulfate, sulfonate ou carboxylate, de préférence, R2 est hydrogène ;
F est un groupement amine, notamment amine primaire, alcool, cétone, dérivé halogéné, isocyanate, acétoacétonate, silanol, ester d'acide carboxylique et d'alcool, époxyde, carbonate ou mercaptan lié au cycle aromatique éventuellement par une chaîne hydrocarbonée droite ou ramifiée, saturée ou insaturée comportant jusqu'à 100 atomes de carbone, de préférence, F est un groupe amine primaire.

De préférence, le composé anti-oxydant est une amine aromatique portant une fonction réactive avec une fonction carboxylique, par exemple un groupe amine primaire ou alcool. Particulièrement préféré sont les amines dérivées de la diphénylamine, comme la 4-aminodiphénylamine (ADPA), la p-amino-4-méthyl-diphénylamine, la p-amino-4'-éthoxy-diphénylamine, la p-amino-4'-méthoxy-diphénylamine et la p-amino-4'-(N,N-diméthylamino)-diphénylamine. Tout particulièrement préférée est la 4-aminodiphénylamine (ADPA).

La proportion des groupements anti-oxydants dans le polymère selon l'invention peut varier largement. Comme il sera mis en évidence dans ce qui suit, une proportion de 0,5% en poids par rapport au poids du polymère permet déjà d'améliorer notablement la résistance à la chaleur du polymère. Il a été observé que la résistance est encore plus marquée lorsque le polymère comporte 1 à 2% en poids. Bien que la présence de groupements anti-oxydants au-delà de 5, voire au-delà de 4% en poids ne nuise pas nécessairement à l'effet anti-oxydant, elle n'est pas souhaitable, notamment afin de sauvegarder le caractère économique et les propriétés applicatives du produit.

Aussi, les polymères selon l'invention comprennent 0,01 à 4%, et en particulier entre 0,1 et 4% massique de groupements anti-oxydants.

Le polymère selon l'invention comporte également à titre de groupes latéraux des chaînes polyoxyalkylées. Ces chaînes polyoxyalkylés peuvent être liées à la chaîne principale directement ou par l'intermédiaire de fonctions carboxyliques, notamment par une liaison ester.

Ces groupes carboxyliques peuvent notamment être sous forme d'acide non dissocié ou d'anhydride d'acide. Le plus souvent, ils seront cependant au moins partiellement neutralisés, estérifiés ou amidifiés.

La proportion molaire des groupes carboxyliques libres dans le polymère peut varier de 0 à 99%, en particulier de 40 à 97%.

Le polymère greffé selon l'invention présente généralement une masse molaire moyenne comprise entre 1000 et 1 000 000 (Mw), de préférence entre 5 000 et 110 000 (Mw) tel que déterminé par SEC (« size exclusion chromatography », chromatographie liquide par exclusion stérique) en équivalent de polyoxyéthylène étalon.

Selon un deuxième aspect, l'invention propose un procédé de préparation du polymère comportant des groupements anti-oxydants décrit ci-dessus.

Selon un mode de réalisation préféré de l'invention, le polymère est préparé par un procédé d'estérification, à partir de prépolymères, dit de « post-greffage ». L'agent antioxydant est également introduit à l'étape de l'éstérification.

De préférence, les groupements anti-oxydants sont introduits avec les chaînes polyoxyalkylées au cours d'une seule étape, dans ce qui est désigné comme une « one pot reaction », rendant ainsi inutile une étape d'isolation intermédiaire. Le procédé peut ainsi être conduit de manière rapide et peu onéreuse.

Le greffage est réalisé de préférence par réaction des fonctions réactives du polymère, notamment les groupes carboxyliques, avec un composé anti-oxydant portant une fonction réactive, notamment un groupe alcool ou amine, primaire ou secondaire.

Les groupements anti-oxydants sont de préférence lié au polymère par le biais d'une fonction amide ou ester.

Aussi, l'invention vise un procédé de préparation du polymère décrit ci-dessus comprenant l'étape de :
(i) l'estérification d'un composé polycarboxylique avec un alcoxypolyalcoxyglycol en présence d'un composé anti-oxydant susceptible de réagir dans les conditions de la réaction avec une fonction réactive portée par le composé polycarboxylique pour former une liaison covalente entre le composé polycarboxylique et le composé anti-oxydant.

Le pH du mélange réactionnel est avantageusement faiblement acide, de préférence compris entre 4 et 6.

L'acide polycarboxylique peut être un polymère comportant des motifs carboxyliques identiques ou différents. Il s'agit de préférence d'un acide polyacrylique ou polyméthacrylique. La masse molaire en poids M_{W} de l'acide polycarboxylique est de préférence comprise entre 500 et 10 000.

L'alcoxypolyalcoxyglycol comporte de préférence des unités d'oxyde d'éthylène et éventuellement d'oxyde de propylène. Plusieurs glycols différents peuvent être utilisés avec avantage. La masse molaire en poids M_{W} du glycol est de préférence comprise entre 150 et 10 000.

De préférence, l'acide polycarboxylique n'est pas entièrement estérifié. Aussi, on ajoutera le plus souvent une quantité de glycol inférieure à celle nécessaire pour assurer l'estérification complète du polymère, par exemple 1 à 40% du nombre des fonctions carboxyliques du polymère.

De manière la plus large, le composé anti-oxydant peut être défini comme comprenant un groupement anti-oxydant et une fonction réactive susceptible de réagir avec une des fonctions du polymère, notamment un groupe carboxylique, pour ainsi permettre le greffage. Par exemple, un composé anti-oxydant peut porter une fonction amine primaire ou alcool laquelle permet à titre de fonction réactive le greffage sur le polymère par une réaction avec les fonctions carboxyliques du polymère.

Cependant, d'autres hypothèses sont envisageables, telles que par exemple: la chaîne principale hydrocarbonée du polymère peut porter des fonctions réactives de type amine, alcool, cétone, dérivé halogéné, isocyanate, acétoacétonate, silanol, ester d'acide carboxylique et d'alcool, époxyde, carbonate ou mercaptan susceptibles de réagir avec des fonctions analogues portées par l'agent anti-oxydant.

La chaîne hydrocarbonée principale du polymère greffé sera donc reliée au groupement anti-oxydant par des liaisons covalentes de différente nature, telles que :
- Amide : réaction entre amine et acide carboxylique et/ou anhydride d'acide carboxylique et/ou ester d'acide et d'alcool
- Imide : réaction entre amine et anhydride d'acide carboxylique
- Ester carboxylique : réaction entre alcool et acide carboxylique et/ou anhydride d'acide carboxylique
- Thioester : réaction entre mercaptan et anhydride d'acide carboxylique
- Ether : réaction entre dérivé halogéné et alcool ; réaction entre alcool et époxyde
- Sulfure : réaction entre mercaptan et époxyde, réaction entre mercaptan et dérivé halogéné
- Urée : réaction entre amine et isocyanate
- Uréthanne : réaction entre alcool et isocyanate ; réaction entre carbonate et amine
- Carbonate mixte : réaction entre alcool et carbonate
- Amine Il et/ou III : réaction entre amine I et dérivé halogéné
- Imine : réaction entre cétone et amine I
- Cétoamide : réaction entre amine et acétoacétonate

La quantité de composé anti-oxydant introduite dans le mélange réactionnel dépendra du taux de greffage souhaité. Avantageusement, on ajoutera moins de 4 % en poids par rapport au poids sec de polymère.

De préférence, le procédé selon l'invention est conduit de manière à réaliser l'étape (i) en deux étapes distinctes :
(a) le mélange réactionnel est d'abord porté à une température comprise entre 50 et 95 °C et à pression réduite;
(b) la réaction est ensuite poursuivie en chauffant à une température comprise entre 100 et 200°C à pression réduite jusqu'à la fin de la réaction.

En variante, on peut polymériser le monomère carboxylique puis estérifier au degré souhaité les groupes carboxyliques par des composés polyoxyalkylés, comme cela est décrit par exemple de la demande de brevet FR 2 776 285, avant de greffer le produit obtenu avec un composé anti-oxydant.

De préférence, le composé anti-oxydant est un alcool ou une amine portant un groupement anti-oxydant, les amines étant préférées en raison de leur meilleure réactivité à basse température.

La réaction de greffage peut avantageusement être réalisée à température supérieure à 120°C, de préférence entre 150 et 200°C, et en particulier entre 170 et 180°C. L'eau formée par la réaction est alors éliminée du mélange réactionnel par évaporation, et le produit réactionnel est récupéré sous forme de résidu sec.

Les groupes carboxyliques éventuellement présents dans le produit réactionnel peuvent être ensuite totalement ou partiellement neutralisés.

Selon un mode de réalisation préféré, le polymère selon l'invention se présente sous forme de poudre.

De préférence, la mise en poudre est réalisée à partir du polymère en solution. En raison de la stabilité thermique accrue du polymère selon l'invention, la mise en poudre peut être réalisée par une technique habituelle et économique telle que l'atomisation sous l'air, l'écaillage, par exemple au moyen d'une technique de séchage sur film mince à partir de la solution de polymère. Cependant, le polymère peut également être mis en poudre directement à l'issue de la synthèse, par exemple par broyage du polymère anhydre fondu puis refroidi.

Aussi, selon un troisième aspect, l'invention vise un polymère à groupement anti-oxydant susceptible d'être obtenu par le procédé objet de l'invention.

Les polymères selon l'invention peuvent être utilisés tels quels. Toutefois, ils sont avantageusement mis en poudre ou formulés avant utilisation afin de faciliter le transport, le stockage et le dosage. Selon un mode de réalisation particulièrement préféré, le polymère selon l'invention se trouve sous forme de poudre.

Selon un quatrième aspect, l'invention propose un adjuvant pour suspensions de particules minérales comprenant le polymère à groupements anti-oxydants décrit.

Afin d'en faciliter la mise en oeuvre et le dosage, l'adjuvant peut être présenté sous forme de solution dans un solvant approprié. En effet, grâce à l'incorporation des fonctions anti-oxydantes dans le polymère, il n'y a plus de problèmes de solubilisation de l'anti-oxydant le polymère protégé contre l'oxydation est soluble et peut donc aisément être formulé sous forme de solution. On n'est donc plus confronté aux problèmes de ségrégation, sédimentation ou floculation observés avec des émulsions, et le stockage est aisé.

De préférence, le solvant approprié comprend ou est constitué d'eau. Dans certains cas, l'addition d'un autre solvant, tel qu'un alcool ou d'un glycol peut être envisagée en complément ou en alternative, par exemple pour faciliter la solubilisation.

La concentration de l'adjuvant en polymère dépend principalement de l'application envisagée. Généralement, la formulation de l'adjuvant comprend 1 à 50, de préférence 10 à 40% en poids de polymère par rapport au poids total.

Grâce au greffage des groupements anti-oxydants, le polymère selon l'invention est le plus souvent hydrosoluble et forme des solutions limpides stables dans le temps.

En variante, l'adjuvant peut également être présenté sous forme sèche, notamment en poudre. La poudre est réalisée soit directement à partir du polymère sec obtenue à l'issue de la synthèse, soit à partir du polymère mis en solution.

Différentes technologies de mise en poudre du polymère anhydre peuvent être utilisées telles que le pastillage et broyage subséquent ou écaillage et broyage subséquent ou encore la pulvérisation par refroidissement de polymère fondu anhydre (appellée en anglais « spray cooling »).

Différentes technologies de mise en poudre à partir du polymère en solution peuvent être utilisées telles que l'atomisation, l'écaillage par film mince sur tambour et le broyage. Généralement, la mise en poudre de polymères à partir de solution est mieux maîtrisée techniquement et justifie de ce fait fréquemment l'étape préalable supplémentaire de mise en solution du polymère.

La formulation de l'adjuvant peut par ailleurs comprendre d'autres additifs habituels, tels que des agents anti-mousse, des accélérateurs, des retardateurs, des agents hydrofuges, des agents désaérants, d'autres dispersants, des entraîneurs d'air ou des stabilisants d'agents anti-mousse.

Aussi, l'invention propose selon un cinquième aspect l'utilisation du polymère décrit ci-dessus pour la fluidification de suspensions de particules minérales et pour le maintien de l'ouvrabilité de ces suspensions.

A titre de suspensions de particules minérales, on peut mentionner en particulier les compositions de ciment, et notamment les bétons, notamment les bétons préfabriqués et les bétons prêts à l'emploi.

Par ailleurs, la résistance thermique des polymères selon l'invention permet d'envisager la préparation de liants hydrauliques adjuvantés, notamment cimentaires, sous forme sèche. Ces liants présentent une demande en eau réduite en raison de l'action dispersante du polymère selon l'invention.

Selon un dernier aspect, l'invention vise donc l'utilisation d'un polymère selon l'invention pour réduire la demande en eau de compositions hydrauliques.

La quantité d'adjuvant à ajouter à la suspension de particules minérales dépend bien entendu des propriétés recherchées et de l'application envisagée. On observe que pour les compositions préférées de l'invention, ce dosage varie en revanche peu avec la nature du milieu, et en particulier peu de la composition chimique des ciments utilisés.

Généralement, pour une composition de ciment, un dosage en adjuvant de 0,01 à 2%, de préférence de 0,05 à 1% et tout particulièrement de 0,1 à 0,5% en poids en polymère par rapport au poids du ciment est approprié pour la plupart des applications standards.

A titre indicatif, un dosage efficace en adjuvant pour la préparation d'une composition de béton prêt à l'emploi est de 0,7 à 1,5% d'une formulation à 20% en poids d'extrait sec par rapport au poids de ciment.

L'introduction de groupements anti-oxydants permet de conserver l'effet dispersant des polymères carboxyliques polyalcoxylés, notamment en prévenant la dégradation thermique des chaînes latérales polyoxyalkylées.

La présence conjuguée, dans les polymères à groupements anti-oxydants selon l'invention, de longues chaînes polyoxyalkylées faisant effet de dispersion et de groupes anti-oxydants ayant une capacité de supprimer ou ralentir l'oxydation est supposée être la raison des propriétés intéressantes de ces polymères.

Les polymères comportant des groupements anti-oxydants décrits sont donc particulièrement intéressants à titre de plastifiant de suspensions de particules minérales, notamment de compositions de ciment.

En effet, ces polymères peuvent, du fait de leur stabilité vis-à-vis de la chaleur et/ou de l'oxydation, être transportés, stockés et mélangés, y compris sous forme de poudre, sans dégradation. En particulier, il est possible d'obtenir la classification transport pour ces composés.

Les polymères selon l'invention sont solubles et donc aisément formulés sous forme de solution, notamment aqueuse, et présentent une faible viscosité, ce qui évite les problèmes de ségrégation, sédimentation ou floculation observés avec des émulsions et assure donc un stockage aisé et une facilité d'emploi.

Du fait de leur stabilité thermique et vis-à-vis de l'oxydation, les polymères selon l'invention peuvent être incorporés dans des compositions à base de liant hydraulique, notamment des ciments même avant le broyage, sans dégradation thermique durant le processus, afin de leur conférer des propriétés spécifiques (ciments préfluidifiés, stabilité des ciments au stockage, diminution de la demande en eau des ciments). Il est ainsi envisageable de préparer un mélange sous forme de poudre, avec un liant hydraulique pour réaliser une poudre organominérale facile à mettre en oeuvre et stable au stockage.

Par ailleurs, le polymère selon l'invention confère, comme il a été démontré, l'effet fluidifiant attendu et les propriétés mécaniques au même niveau que les polymères comparables non stabilisés.

L'invention sera mieux expliqué au regard des exemples et des figures qui suivent, donnés à titre non limitatif.

### [Brève description des figures]

Les figures en annexe montrent :
FIG.1: une courbe de calorimétrie différentielle par balayage (DSC) d'un polymère, la flèche indiquant le temps d'induction;
FIG.2: la viscosité en fonction de la température de solutions de polymères PCP selon les exemples 3 et 4 et selon les exemples de référence 1 et 2 ;
FIG. 3 :la viscosité en fonction du gradient de vitesse d'une formulation d'enduit auto-lissant adjuvantée d'un polymère PCP selon l'exemple 4 et selon l'exemple de référence 1 et 3; et
FIG.4 : une courbe de calorimétrie différentielle par balayage (DSC) du polymère de l'exemple 4, sous forme de poudre et sous forme de solution, et du polymère de l'exemple de référence 2 sous forme de poudre.

### [EXEMPLES]

### EXEMPLE DE REFERENCE 1

### Polymère PCP sans agent anti-oxydant

Dans un quadricol chauffé, muni d'un agitateur et relié à une trompe d'eau, on a introduit 100g d'acide polyméthacrylique en solution aqueuse à 30% puis 0,64g d'hydroxyde de sodium en solution aqueuse à 50% en poids. Dans le milieu ont été ensuite introduits 68,9g (5,6%molaire des fonctions carboxyliques de l'acide polyméthacrylique) de polyoxyde d'éthylène méthoxylé de masse molaire moyenne en poids Mw=3800. Le mélange réactionnel a été porté à une température de 80°C. A ce stade le milieu est limpide. On met l'ensemble progressivement sous vide jusqu'à une pression d'environ 50 mbar et la température du milieu réactionnel est ensuite portée progressivement à 175°C.

La réaction a été poursuivie pendant une durée de 2 heures à compter du moment où le milieu réactionnel atteint 170-175°C à une pression de 50 mbar. L'avancement de la réaction d'estérification est suivi par le dosage de MPEG non réagi, par GPC, par comparaison de l'aire du pic avec une courbe d'étalonnage établie préalablement.

A l'issue de la réaction, le milieu réactionnel est ramené à pression atmosphérique et la chauffe est coupée. A ce stade, la présence de particules insolubles est visible. Une fois la température du milieu réactionnel inférieure à 90°C, le polymère fondu est dilué à 50% en poids dans l'eau, puis neutralisé à pH 6,5 à l'aide d'une solution d'hydroxyde de sodium et ramené à 40% d'extrait sec.

### EXEMPLE DE REFERENCE 2

### Polymère PCP mélangé avec un agent anti-oxydant (émulsion)

Le polymère en solution et neutralisé à pH 6,5 obtenu à l'exemple de référence 1 est mélangé avec 0,35% en poids par rapport au poids sec de polymère d'ADDITIN^{®} RC7135 (mélange de dérivés de diphénylamine commercialisé par la société Rhein Chemie, Allemagne) puis dilué à 35%.On obtient une émulsion.

### EXEMPLE DE REFERENCE 3

### Polymère PCP mélangé avec un agent anti-oxydant (solution)

Le polymère en solution et neutralisé à pH 6,5 obtenu à l'exemple de référence 1 est mélangé avec 2% en poids par rapport au poids sec de polymère de 4-aminodiphényl amine (numéro CAS 101-54-2). On obtient une solution contenant quelques insolubles.

### EXEMPLE 1

### Polymère greffé d'un agent anti-oxydant

Dans un quadricol chauffé, muni d'un agitateur et relié à une trompe d'eau, on a introduit 100g d'acide polyméthacrylique en solution aqueuse à 30% puis 0,64 g d'hydroxyde de sodium en solution aqueuse à 50% en poids. Dans le milieu ont été ensuite introduit 68,9g (5,6%molaire des fonctions carboxyliques de l'acide polyméthacrylique) de polyoxyde d'éthylène méthoxylé de masse molaire moyenne en poids Mw=3800. Le mélange réactionnel a été porté à une température de 80°C. A ce stade le milieu est limpide. 0.5 g de 4-aminodiphénylamine, soit 0,5% en poids par rapport au poids de polymère sec, sont introduits dans le réacteur et passent très rapidement en solution. On met progressivement sous vide jusqu'à atteindre une pression d'environ 50 mbar. A la fin de la distillation de 2/3 de l'eau, le milieu est remis à la pression atmosphérique. La température du milieu réactionnel est ensuite portée progressivement à 175°C tout en poursuivant la distillation de l'eau. A 170-175°C, le vide est remis progressivement jusqu'à atteindre une pression d'environ 50 mbar.

La réaction a été poursuivie pendant une durée de 2 heures à compter du moment où le milieu réactionnel atteint 170-175°C à une pression de 50 mbar. L'avancement de la réaction d'estérification est suivi par le dosage de MPEG non réagi, par GPC, par comparaison de l'aire du pic avec une courbe d'étalonnage établie préalablement.

A l'issue de la réaction, le milieu réactionnel est ramené à pression atmosphérique et la chauffe est coupée. Aucune formation de grains insoluble n'est visible à ce stade Une fois la température du milieu réactionnel inférieure à 90°C, le polymère fondu est dilué à 50% en poids dans l'eau, puis neutralisé à pH 6,5 à l'aide d'une solution d'hydroxyde de sodium et ramené à 40% d'extrait sec. La solution de polymère obtenue est limpide sans aucun insoluble.

### EXEMPLES 2 à 4

### Polymère greffé d'un agent anti-oxydant (variation du taux de greffage)

L'exemple 1 est répété selon le même mode opératoire sauf à remplacer la quantité d'amine introduite à titre d'agent anti-oxydant comme indiqué dans le tableau 1 ci-dessous. Les solutions de polymère obtenues sont limpides sans aucun insoluble.

La teneur en 4-aminodiphénylamine dans les solutions de polymère a été mesurée au moyen de l'essai suivant :
1) Dilution d'une quantité connue de produit dans 300 mL d'eau.
2) Réglage du pH de la solution aqueuse à une valeur de 9.
3) Triple extraction avec 300 mL d'acétate d'éthyle, respectivement.
4) Réunion des phases organiques et lavage avec 2 x 200 mL d'eau.
5) Evaporation du solvant au rotavapor.
6) Reprise du résidu solide dans 100 g d'éthanol et dosage par HPLC à l'aide d'un étalonnage préalable.

La teneur résiduelle en 4-aminodiphénylamine de la solution de polymère de l'exemple 4 ainsi mesurée est de 0.02% en poids par rapport au poids de polymère sec. Compte tenu du fait que la teneur initiale en amine était de 2% par rapport au poids de polymère sec, ce résultat met en évidence une réaction quasi complète de l'amine.

Par ailleurs, on constate que la teneur résiduelle en amine ne varie pas pour différents pH (pH d'extraction de 9 et 13), ce qui conforte l'hypothèse d'une liaison de l'amine au polymère sous forme covalente.

**Tableau 1 : Taux de greffage en agent anti-oxydant**

| **EXEMPLE** | **Quantité d'agent anti-oxydant** [g] | **Taux de greffage** [% molaires*] | **Taux de greffage** [% en poids**] |
|---|---|---|---|
| 1 | 0.5 | 0,80 | 0,50 |
| 2 | 0.75 | 1,30 | 0,75 |
| 3 | 1 | 1,70 | 1 |
| 4 | 2 | 3,30 | 2 |
| Réf.1 | - | - | - |
| Réf.2 | 0.35 | - | - |
| Réf.3 | 2.0 | - | - |

| | | | |
|---|---|---|---|
| * des fonctions carboxyliques ** par rapport au poids du polymère sec | | | |

### A. Evaluation de la stabilité thermique

La stabilité thermique des polymères obtenus selon les exemples a été évaluée par mesure de calorimétrie différentielle à balayage (DSC) sous air et comparée à celle du polymère de l'exemple de référence 1. Le même essai a été réalisé afin d'évaluer la stabilité thermique des polymères sous forme de poudre.

Les poudres des polymères ont été préparées par atomisation d'une solution aqueuse du polymère selon l'exemple 4 et de l'exemple de référence 2 (PCP mélangé avec un agent anti-oxydant en émulsion), respectivement.

Les échantillons de polymère issu de solution ont été préparés par dépôt de la solution de polymère en film sur une plaque de verre puis séchage en étuve. Le film sec de polymère a été ensuite retiré de la plaque par grattage puis introduit dans des coupelles spécifiques à la calorimétrie différentielle.

La calorimétrie différentielle est ensuite réalisée dans les conditions suivantes :
Montée de 25°C à 190°C - 2°C par minute et maintien à 190°C pendant 5h.
Débit air : 60 ml/min

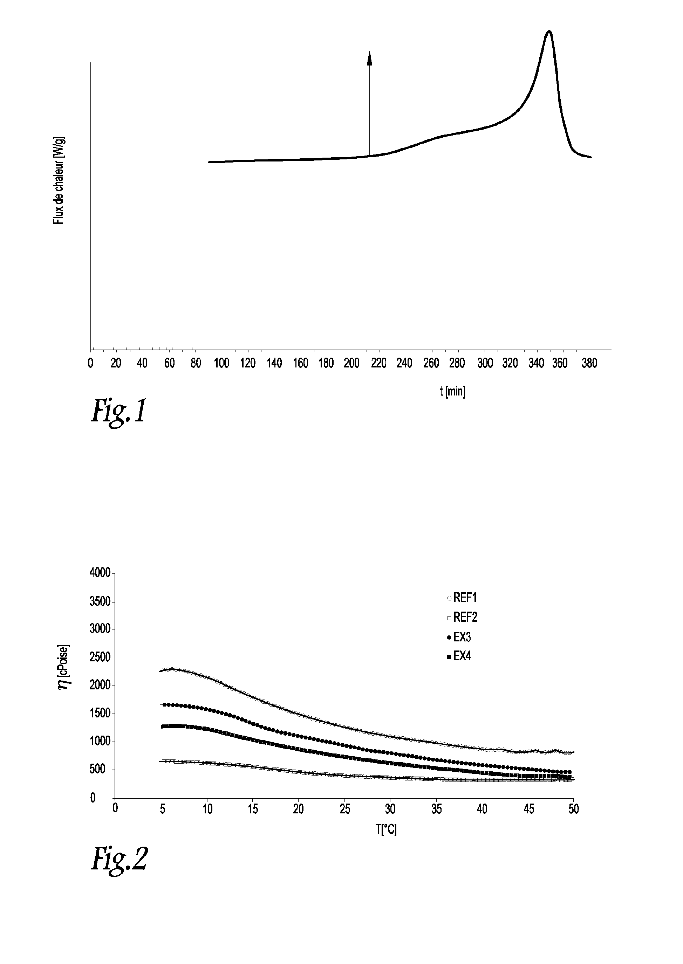

A titre d'indicateur de la stabilité thermique, on relève sur les courbes de calorimétrie différentielle le temps écoulé avant qu'apparaisse le pic exothermique de décomposition, dit temps d'induction, indiqué par la flèche dans la figure 1.

**Tableau 2 : Stabilité thermique à 190°C**

| **EXEMPLE** | **Temps d'induction** [min] | **Variation du temps d'induction** [%] |
|---|---|---|
| Réf. 1 | 60 | 0 |
| Réf. 2 | 285 | 375 |
| Réf. 2 (poudre) | 272 | 353 |
| EX. 1 | 110 | 83 |
| EX. 2 | 170 | 183 |
| EX. 3 | 215 | 258 |
| EX. 4 | > 380 | > 533 |
| EX. 4 (poudre) | >380 | > 533 |

Les résultats de ces essais pour les polymères étudiés sont regroupés dans le tableau 2 ci-dessus.

On constate tout d'abord que le temps d'induction des polymères est sensiblement allongé en présence de composés anti-oxydants. Plus spécifiquement, on constate que la stabilité thermique des polymères PCP augmente avec le taux de greffage d'agent anti-oxydant (exemple 1 à 4) par comparaison au même PCP qui ne contient pas d'agent anti oxydant (exemple de référence 1). En fait, la variation du temps d'induction est très bien corrélée au taux de greffage, ce qui peut être expliqué par une bonne répartition de l'agent anti-oxydant sur le polymère.

Par ailleurs, on constate que le polymère PCP obtenu selon l'exemple 4 donne une meilleure stabilité que l'exemple de référence 2, qui comporte le polymère et l'agent anti-oxydant sous forme d'émulsion.

Ces résultats confirment également que la stabilité des polymères PCP greffés selon l'invention n'est pas affectée lorsqu'ils sont mis en poudre (voir Exemple 4 et Exemple 4 poudre).

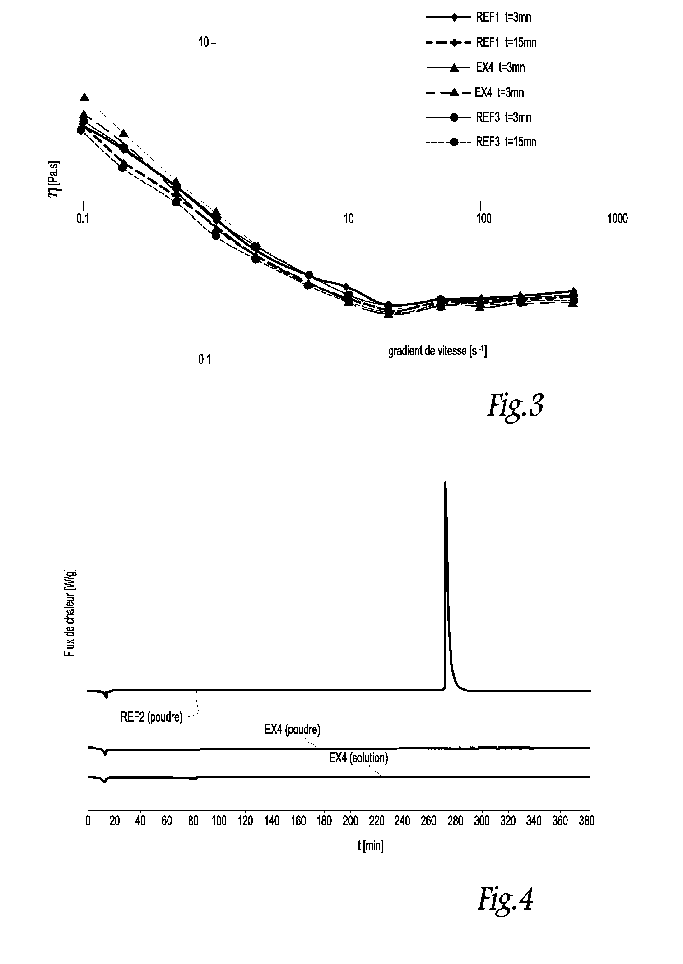

La courbe recueillie pour le polymère de l'exemple 4, sous forme de solution et de poudre et du polymère de l'exemple de référence 2 sous forme de poudre est illustrée à la figure 4. On observe que la courbe obtenue pour la poudre du polymère de l'exemple de référence 2 montre un pic exothermique, interprété comme temps d'induction alors que ce pic est absent des courbes enregistrées pour le polymère selon l'invention, qu'il soit sous forme de poudre ou de solution.

### B. Viscosité

La viscosité des polymères en solution, un paramètre important puisqu'il conditionne en particulier la facilité de dosage, a été évaluée en fonction de la température comme suit.

La solution de polymère a été déposée sur le plan d'un rhéomètre à résistance chauffante (BOHLIN INSTRUMENT - CVO 100) puis la viscosité a été mesurée à différentes températures à l'aide d'un cône.

La figure 2 illustre les courbes de viscosité obtenues pour les polymères selon l'invention et selon les exemples de référence, dans des conditions identiques, à savoir neutralisés à pH 6,5 et en solution 40% de teneur sèche respectivement.

Les résultats montrent que les solutions de polymère obtenues selon l'exemple 3 et 4 présentent une viscosité plus faible que la solution de polymère selon l'exemple de référence 1, exempt d'agent anti-oxydant.

### C. Evaluation des performances applicatives

Afin d'évaluer les performances applicatives des polymères selon l'invention, on a évalué l'auto-étalement, la viscosité, le temps de prise et les résistances mécaniques d'une formulation d'enduit auto-lissant adjuvanté par les polymères selon l'invention et les polymères de référence respectivement.

La formulation d'enduit auto-lissant utilisée pour l'évaluation, hors polymère, est détaillée dans le tableau 3 ci-dessous. Le mode opératoire utilisé est le suivant :
On pèse 480g d'eau de ville dans la cuve métallique d'un mélangeur Turbotest Rayneri (VMI Rayneri) munie d'une pale ½ ancre puis ajouter, sous agitation à 240 tr/min, en 20 s les composants secs préalablement mélangés. Le moment d'ajout des composants secs constitue le point de départ de la prise de temps. On malaxe l'ensemble sous une agitation à 800 tr/min pendant 2 min.

Le polymère PCP est ajouté dans le dosage indiqué dans le tableau 4 ci-dessous à la formulation, aux composants secs s'il s'agit de poudre, sinon à l'eau de gâchage.

**Tableau 3 : Formulation de l'enduit auto-lissant**

| **Composant** | **Quantité** |
|---|---|
| | [% en poids] |
| Ciment alumineux | 20 |
| Sulfate de Calcium | 10 |
| Carbonate de calcium | 17,62 |
| Carbonate de Calcium | 15,73 |
| Sable Siliceux | 34,56 |
| Résine redispersable | 1,5 |
| Carbonate de lithium | 0,05 |
| Acide tartrique | 0,14 |
| Ether de cellulose | 0,1 |
| Agent antimousse | 0,1 |
| E/C | 24% |

### C.1. Auto-étalement

L'auto-étalement de la formulation d'enduit préparé comme indiqué ci-dessus est mesuré selon la procédure suivante.

Après préparation de l'enduit selon le mode opératoire indiqué ci-dessus, on pose un cône d'étalement au centre d'une plaque de verre puis on remplit le cône à ras bord, aux échéances 3, 7 et 20 min après le début du malaxage.

On soulève ensuite le cône délicatement à la verticale et laisse égoutter quelques instants avant de mesurer l'étalement sur 3 diagonales après stabilisation du flow (après environ 3 min). On retient comme résultat la moyenne des 3 mesures (résultat exprimé en mm). On observe le cas échéant toute particularité de l'étalement l'aspect du mortier dans le bol (ex : ressuage, ségrégation).

Les résultats obtenus pour les formulations d'enduits adjuvantés de polymère selon l'exemple 4 et des polymères de référence 1 et 3 à un dosage de 0,2% et 0,05% sont regroupés dans le tableau 4 ci-dessous.

**Tableau 4 : Auto-étalement d'un enduit formulé avec ajout d'un polymère PCP**

| **EXEMPLE** | **Dosage *** | **Auto-étalement** | | | | |
|---|---|---|---|---|---|---|
| | | 3 min | 7 min | 15 min | 20 min | 25 min |
| Réf 1 | 0.2 | 155 | 160 | 160 | 160 | 160 |
| Réf 3 | 0.2 | 160 | 160 | 160 | 160 | 160 |
| EX 4 | 0.2 | 160 | 160 | 162 | 160 | 160 |
| Réf 1 | 0.05 | 160 | 155 | 155 | 155 | 145 |
| Réf 3 | 0.05 | 150 | 150 | 150 | 150 | 145 |
| EX 4 | 0.05 | 158 | 160 | 160 | 150 | 150 |

| | | | | | | |
|---|---|---|---|---|---|---|
| * en % en poids par rapport au total de matière sèche | | | | | | |

On constate que les valeurs d'auto-étalement au dosage de 0,2% sont équivalentes et restent stables pendant 25 minutes pour le polymère de référence 1 (polymère sans agent anti-oxydant) et le polymère selon l'exemple 4. Ces résultats indiquent que le greffage par un agent anti-oxydant n'affecte pas les performances en termes d'auto-étalement.

On observe également au dosage de 0,05% des performances équivalentes avec le polymère selon l'invention comparé au polymère selon l'exemple de référence 3 (polymère additionné d'agent anti-oxydant).

Les résultats concernant les enduits préparés avec le polymère selon l'invention sous forme de poudre sont rassemblés dans le tableau 5 ci-dessous. On constate que la mise en poudre obtenu à partir du polymère greffé n'affecte pas les valeurs d'auto étalement par rapport à une poudre obtenue à partir d'une émulsion, les valeurs mesurées étant équivalentes.

**Tableau 5 : Auto-étalement d'un enduit de ciment adjuvanté d'un polymère PCP**

| **EXEMPLE** | **Dosage *** | **Auto-étalement** | | | | |
|---|---|---|---|---|---|---|
| | | 3 min | 7 min | 15 min | 20 min | 25 min |
| Exemple de référence 2 (poudre) | 0.03 | 116 | 123 | ND | 130 | ND |
| | 0.05 | 141 | 144 | ND | 148 | ND |
| | 0.1 | 145 | 150 | ND | 152 | ND |
| | 0.2 | 148 | 150 | ND | 147 | ND |
| Exemple 4 (poudre) | 0.03 | 107 | 126 | ND | 126 | ND |
| | 0.05 | 146 | 151 | ND | 153 | ND |
| | 0.1 | 150 | 155 | ND | 155 | ND |
| | 0.2 | 150 | 155 | ND | 157 | ND |

### C.2. Viscosité de l'enduit

Afin de comparer l'effet des polymères selon l'invention sur la viscosité de l'enduit, on a évalué la viscosité en fonction du gradient de cisaillement d'enduits adjuvantés avec un dosage de 0,2% selon la procédure suivante.

Le comportement des enduits à différentes étapes de la durée pratique d'utilisation du mortier une fois gâché peut être décrit par une mesure de profil d'écoulement. Ce type de mesures à gradients de vitesse variable permet en particulier de suivre le comportement rhéologique du produit au cours de la prise hydraulique. En effet, certains domaines de gradients de vitesse sont directement représentatifs du comportement du produit lors de son stockage, de son pompage, ou encore de sa maniabilité.

Le comportement rhéologique d'un enduit auto-lissant de composition indiquée dans le tableau 3 ci-dessus est déterminé de la manière suivante : 300 g de mortier autolissant sont gâchés au taux d'eau nominal dans un pot de 0.5 L (d = 9 cm) à l'aide d'un mélangeur IKA muni d'une pale de 8 cm pendant 3 minutes à 800 tr/min. Environ 7 minutes après le début de gâchage, la viscosité et la contrainte sont mesurées en effectuant un balayage en gradient de vitesse de 0,1 à 1000 s⁻¹ à l'aide d'un rhéomètre (Rhéomat RM260, commercialisé par la société Mettler Toledo) de géométrie cylindro-conique MS DIN 145.

Avant la mesure, on fait subir à tous les échantillons une même sollicitation mécanique, à savoir un précisaillement à 50 s⁻¹ pendant 10 secondes, afin de les positionner dans un état de structuration comparable. Les gradients de vitesse sont choisis sur une échelle logarithmique, et les mesures effectuées pas à pas à des gradients de vitesse de 0,1, 0,2, 0,5, 1, 2, 5, 10, 20, 50, 100, 200 et 500 s⁻¹ puis de 500 à 0,1 s⁻¹ via la même séquence de mesure. De plus, afin de tenir compte de l'impact du gradient de vitesse sur le temps nécessaire à l'obtention de l'équilibre rhéologique, on utilise des temps de mesure plus longs pour des gradients de vitesse faibles, afin d'assurer que l'équilibre rhéologique soit atteint. Après évaluation préliminaire, les temps de mesures retenus sont : 20 secondes pour des gradients de vitesse de 0,1, 0,2 et 0,5 s⁻¹, 10 secondes pour des gradients de 1, 2 et 5 s⁻¹, 20 secondes pour des gradients de 10, 20 et 50 s⁻¹, et 5 secondes pour des gradients de 100, 200 et 500 s 1

Dix mesures de viscosité sont effectuées pour chaque gradient de vitesse. Le résultat est donné par la moyenne de ces valeurs.

Les résultats obtenus sont regroupés dans la figure 3. On constate que la viscosité des enduits formulés avec un polymère exempt d'agent anti-oxydant (exemple de référence 1) est sensiblement équivalente à celle d'un tel enduit formulé avec un polymère selon l'exemple 4. Cette observation indique que le greffage du polymère avec un agent anti-oxydant n'affecte pas la performance du polymère au niveau de la viscosité.

### C.3. Temps de prise et résistance mécanique

Les valeurs de temps de prise et les résistances mécaniques en flexion et en compression ont été également évaluées pour les formulations d'enduit auto-lissant adjuvantées étudiées ci-dessus.

Le temps de prise a été déterminé selon le test de la chute d'une aiguille Vicat tel que décrit dans la norme NF EN 196-3. Les résultats sont indiqués dans le tableau 6 ci-dessous.

Aux fins de déterminer la résistance du mortier obtenu, on a préparé des éprouvettes comme suit. Après préparation du mortier comme décrit ci-dessus, on confectionne des éprouvettes de mesures dans des moules métalliques de dimensions 2 x 2 x 16 cm. Les éprouvettes durcies sont démoulées 2h après gâchage et conservées à 23 ± 2 °C et 50 ± 5 %HR jusqu'aux échéances de mesures.

La résistance mécanique en flexion 3 points a été déterminée selon dans une presse Ibertest avec dispositif de flexion 3 points, dont la montée en charge est fixée à 50N/s +/-10N/s. On place et centre l'éprouvette sur le dispositif, face arasée perpendiculaire aux points d'appui. Puis on démarre l'essai avec le paramétrage suivant :
Section C1 = 20 mm Carré C2 = 20 mm
Longueur de base = 100 mm Vitesse de contact 5= 5%

La résistance en compression a été déterminée sur des éprouvettes prismatiques dans une presse Ibertest à compression pour éprouvettes prismatiques, dont la montée en résistance a été fixée à 2400N/s +/-200N/s. A partir des deux demi éprouvettes de l'essai de flexion, on place et centre l'éprouvette sur le dispositif, face arasée perpendiculaire au plateau d'appui. Puis on démarre l'essai avec le paramétrage suivant :
Section C1 = 20 mm Carré C2 = 40 mm
Longueur de base = 100 mm Vitesse de contact 5= 15%

**Tableau 6 : Temps de prise et résistances mécaniques**

| **EXEMPLE** | **Temps de prise** [min] | | **Résistance mécanique à la flexion** [MPa] | | **Résistance mécanique à la compression** [MPa] | |
|---|---|---|---|---|---|---|
| | Début | Fin | 2h | 24h | 2h | 24h |
| Réf 1 | 64 | 73 | 2.4 | 3.8 | 11.6 | 20.8 |
| Réf 3 | 57 | 61 | 2.9 | 4,6 | 13 | 24.2 |
| EX 4 | 71 | 79 | 2.3 | 3.8 | 11.8 | 18.8 |

Les résultats de résistances en flexion et compression sont moyennés pour une même échéance de mesure. Les résultats respectifs pour le polymère selon l'exemple 4 comparé aux polymères selon l'exemple de référence 1 (exempt d'agent anti-oxydant) et l'exemple de référence 3 (mélangé à un agent d'anti-oxydant) sont résumés dans le tableau 6 ci-dessus.

Le temps de prise a été également étudié pour la formulation de l'enduit auto-lissant préparé en utilisant le polymère sous forme de poudre, pour différents dosages. Les résultats sont rassemblés dans le tableau 7 ci-dessous.

**Tableau 7 : Temps de prise pour différents dosages**

| **EXEMPLE** | **Dosage *** | **Temps de prise [min]** | |
|---|---|---|---|
| | | Début | Fin |
| Exemple de référence 2 (poudre) | 0.03 | 54 | 60 |
| | 0.05 | 59 | 65 |
| | 0.1 | 72 | 78 |
| | 0.2 | 103 | 112 |
| Exemple 4 (poudre) | 0.03 | 67 | 73 |
| | 0.05 | 65 | 71 |
| | 0.1 | 81 | 84 |
| | 0.2 | 100 | 106 |

Les résultats obtenus font apparaître que le greffage par un agent anti-oxydant du polymère PCP n'affecte pas de manière notable le temps de prise ni les résistances en flexion et en compression du matériau durci. On constate par ailleurs que ces avantages sont également obtenus lorsque le polymère selon l'invention est utilisé sous forme de poudre et ce sur une large gamme de dosages.

Les résultats ci-dessus mettent par ailleurs en évidence que le greffage n'affecte pas les propriétés applicatives telles que la viscosité de la formulation, le temps de prise et la résistance mécanique en flexion et en compression.

Les polymères selon l'invention offrent donc la possibilité de disposer à moindre coût de dispersants polymères à stabilité thermique améliorée.

### C.4. Demande en eau de ciments adjuvantés de PCP greffé avant le broyage

Afin d'évaluer la résistance des polymères selon l'invention à la température du ciment pendant le broyage, la demande en eau de ciments broyés en présence de polymères selon l'invention a été évaluée. A titre de comparaison, le même test a été réalisé également avec un polymère non greffé. Un ciment préparé sans polymère a servi de témoin.

Un ciment CEM I a été broyé à l'aide d'un broyeur à boulets chauffant après incorporation de 2000 ppm de solution de polymère, exprimé en % en poids sec par rapport au poids de ciment. Le broyage a été effectué dans un broyeur chauffant à finesse Blaine avoisinant 4000 g/cm². Le ciment a ensuite été maintenu pendant 3h à 100°C.

**Tableau 8 : Demande en eau selon EN 196-3 d'un ciment broyé adjuvanté**

| **EXEMPLE** | **E/C** |
|---|---|
| Témoin | 0.218 |
| Réf. 1 | 0.220 |
| EX. 4 | 0.213 |

Les échantillons de ciment préparés ont été ensuite respectivement gâchés avec la quantité d'eau requise pour l'obtention d'une même plasticité selon la norme française EN 196-3. Le rapport entre la quantité d'eau et la quantité de ciment est appelé rapport E/C.

Les résultats sont résumés dans le tableau 8 ci-dessus. On constate que la demande en eau n'est pas affectée lorsqu'un PCP non protégé est ajouté au clinker avant broyage. En revanche, lorsqu'un PCP selon l'invention, greffé par des groupements anti-oxydants est ajouté au ciment, on constate que la demande en eau baisse, indiquant la présence efficace d'un dispersant. On peut déduire de ces résultats que le polymère greffé selon l'invention préserve sa capacité de réducteur d'eau même après avoir été exposé au milieu oxydant à température élevée pendant une durée prolongée.

En fait, le polymère selon l'invention permet d'obtenir un ciment avec une demande en eau améliorée (E/C plus faible) d'environ 5% pour l'exemple 4 par rapport à l'exemple de référence 1.

En conclusion, la présence conjuguée, dans les polymères à groupes anti-oxydants selon l'invention, de longues chaînes polyoxyalkylées faisant effet de dispersion, et de groupes anti-oxydants ayant une capacité de supprimer ou ralentir l'oxydation d'agents oxydants paraît être à l'origine des propriétés particulières du polymère selon l'invention. Ces polymères comportant des groupements anti-oxydants décrits sont donc particulièrement intéressants à titre de plastifiant de compositions hydrauliques, notamment de compositions de ciment.

Du fait de leur stabilité thermique et vis-à-vis de l'oxydation, les polymères selon l'invention peuvent être incorporés dans des compositions à base de liant hydraulique, notamment des ciments même avant le broyage, sans dégradation thermique durant le processus, afin de leur conférer des propriétés spécifiques (ciments préfluidifiés, stabilité des ciments au stockage, diminution de la demande en eau des ciments). Il est ainsi envisageable de préparer un mélange sous forme de poudre avec un liant hydraulique pour réaliser une poudre organominérale facile à mettre en oeuvre et stable au stockage.

Ils sont par ailleurs solubles et donc aisément formulés sous forme de solution, notamment aqueuse, ce qui évite les problèmes de ségrégation, sédimentation ou floculation observés avec des émulsions. Les solutions sont limpides, stables et peu visqueuses et permettent un stockage aisé et une facilité d'emploi.

La solubilité dans l'eau et la résistance à la chaleur et l'oxydation facilite la transformation des polymères selon l'invention, puisque la mise en poudre peut être réalisée de manière aisée et économique, notamment par atomisation sous air, et donc sans nécessité d'une mise sous gaz inerte de la tour d'atomisation.

Du fait de leur stabilité vis-à-vis de la chaleur et/ou de l'oxydation, ces polymères peuvent en outre être transportés, stockés et mélangés, y compris sous forme de poudre, sans danger. En particulier, il est possible d'obtenir la classification transport pour ces composés.

Par ailleurs, les polymères selon l'invention confèrent, comme il a été démontré, l'effet fluidifiant attendu et les propriétés mécaniques au même niveau que les polymères comparables non stabilisés.

### C.5. Comparaison de l'étalement de PCP non greffés et greffés

Afin de mettre en évidence l'effet stabilisant du greffage par des groupements anti-oxydants, on a adjuvanté un ciment avant broyage avec un PCP et un même PCP greffé puis comparé les performances de mortiers préparés à partir de ces ciments.

### EXEMPLE DE REFERENCE A

### Polymère non greffé d'un agent anti-oxydant

Dans un quadricol chauffé, muni d'un agitateur et relié à une trompe d'eau, on a introduit 241.49 g d'acide polyméthacrylique en solution aqueuse à 30% puis 1,64g d'hydroxyde de sodium en solution aqueuse à 50% en poids. Dans le milieu ont été ensuite introduits et 758,2 g de méthoxypolyéthylène glycol de masse molaire moyenne en poids Mw=5000. Le mélange réactionnel a été porté à une température de 80°C. A ce stade le milieu est limpide. On met l'ensemble progressivement sous vide jusqu'à une pression d'environ 50 mbar et la température du milieu réactionnel est ensuite portée progressivement à 165°C.

La réaction a été poursuivie pendant une durée de 4 heures à compter du moment où le milieu réactionnel atteint 160-165°C à une pression de 50 mbar. L'avancement de la réaction d'estérification est suivi par le dosage de MPEG non réagi, par GPC, par comparaison de l'aire du pic avec une courbe d'étalonnage établie préalablement. La réaction est arrêtée lorsque le taux de MPEG résiduel représente moins de 2% de la masse réactionnelle.

A l'issue de la réaction, le milieu réactionnel est ramené à pression atmosphérique et la chauffe est coupée. Une fois la température du milieu réactionnel inférieure à 90°C, le polymère fondu est dilué à 50% avec 637,9 g d'eau. 300,2 g de solution de polymère sont dilués avec 321,3 g d'eau puis le pH amené à 6,5 avec 4,51 g de solution d'hydroxyde de sodium à 50%. L'extrait final est de 25,1%.

### EXEMPLE DE REFERENCE B

### Polymère non greffé d'un agent anti-oxydant

Dans un réacteur verré à double enveloppe, muni d'un agitateur et relié à une pompe à vide, on a introduit 1761,8 g d'acide polyméthacrylique en solution aqueuse à 30% puis 11,15g d'hydroxyde de sodium en solution aqueuse à 50% en masse. Dans le milieu ont été ensuite introduits et 2230,1 g de méthoxypolyéthylène glycol de masse molaire moyenne en poids Mw=2000. Le mélange réactionnel a été porté à une température de 80 °C. A ce stade le milieu est limpide. On met l'ensemble progressivement sous vide jusqu'à une pression d'environ 50 mbar et la température du milieu réactionnel est ensuite portée progressivement à 165°C.

La réaction a été poursuivie pendant une durée de 4 heures à compter du moment où le milieu réactionnel atteint 160-165 °C à une pression de 50 mbar. L'avancement de la réaction d'estérification est suivi par le dosage de MPEG non réagi, par GPC, par comparaison de l'aire du pic avec une courbe d'étalonnage établie préalablement. La réaction est arrêtée lorsque le taux de MPEG résiduel représente moins de 2% de la masse réactionnelle.

A l'issue de la réaction, le milieu réactionnel est ramené à pression atmosphérique et la chauffe est coupée. Une fois la température du milieu réactionnel inférieure à 90°C, le polymère fondu est dilué à 50% avec 2553. g d'eau. 340,1 g de solution de polymère sont dilués avec 362,3 g d'eau puis le pH amené à 6,5 avec 10,2 g de solution d'hydroxyde de sodium à 50%. L'extrait final est de 21,9%.

### EXEMPLE A

### Polymère de l'exemple de référence A greffé d'un agent anti-oxydant

Dans un quadricol chauffé, muni d'un agitateur et relié à une trompe d'eau, on a introduit 241.49 g d'acide polyméthacrylique en solution aqueuse à 30% puis 1,64g d'hydroxyde de sodium en solution aqueuse à 50% en poids. Dans le milieu ont été ensuite introduits et 758,2 g de méthoxypolyéthylène glycol de masse molaire moyenne en poids Mw=5000. Le mélange réactionnel a été porté à une température de 80°C. A ce stade le milieu est limpide. 16,7 g de 4-aminodiphénylamine, soit 2% en poids par rapport au poids de polymère sec, sont introduits dans le réacteur et passent très rapidement en solution. On met l'ensemble progressivement sous vide jusqu'à une pression d'environ 50 mbar et la température du milieu réactionnel est ensuite portée progressivement à 165°C.

La réaction a été poursuivie pendant une durée de 4 heures à compter du moment où le milieu réactionnel atteint 160-165°C à une pression de 50 mbar. L'avancement de la réaction d'estérification est suivi par le dosage de MPEG non réagi, par GPC, par comparaison de l'aire du pic avec une courbe d'étalonnage établie préalablement. La réaction est arrêtée lorsque le taux de MPEG résiduel représente moins de 2% de la masse réactionnelle.

A l'issue de la réaction, le milieu réactionnel est ramené à pression atmosphérique et la chauffe est coupée. Une fois la température du milieu réactionnel inférieure à 90°C, le polymère fondu est dilué à 50% avec 632,6 g d'eau. 340,1 g de solution de polymère sont dilués avec 362,3 g d'eau puis le pH amené à 6,5 avec 3,02 g de solution d'hydroxyde de sodium à 50%. L'extrait final est de 21,7%.

### EXEMPLE B

### Polymère de l'exemple de référence B greffé d'un agent anti-oxydant

Dans un réacteur verré à double enveloppe, muni d'un agitateur et relié à une pompe à vide, on a introduit 1761,8 g d'acide polyméthacrylique en solution aqueuse à 30% puis 11,15g d'hydroxyde de sodium en solution aqueuse à 50% en masse. Dans le milieu ont été ensuite introduits et 2230,1 g de méthoxypolyéthylène glycol de masse molaire moyenne en poids Mw=2000. Le mélange réactionnel a été porté à une température de 80 °C. A ce stade le milieu est limpide. 54,8 g de 4-aminodiphénylamine, soit 2% en poids par rapport au poids de polymère sec, sont introduits dans le réacteur et passent très rapidement en solution. On met l'ensemble progressivement sous vide jusqu'à une pression d'environ 50 mbar et la température du milieu réactionnel est ensuite portée progressivement à 165°C.

La réaction a été poursuivie pendant une durée de 4 heures à compter du moment où le milieu réactionnel atteint 160-165 °C à une pression de 50 mbar. L'avancement de la réaction d'estérification est suivi par le dosage de MPEG non réagi, par GPC, par comparaison de l'aire du pic avec une courbe d'étalonnage établie préalablement. La réaction est arrêtée lorsque le taux de MPEG résiduel représente moins de 2% de la masse réactionnelle.

A l'issue de la réaction, le milieu réactionnel est ramené à pression atmosphérique et la chauffe est coupée. 19,4 g de ce polymère anhydre sont dilué dans 71,5 g d'eau puis le pH amené à 6,5 avec 1,1 g de solution d'hydroxyde de sodium à 50%. L'extrait final est de 21,7%.

### BROYAGE DU CIMENT

Un ciment CEM I composé de 95% en masse de clinker et de 5% de gypse a été broyé à l'aide d'un broyeur à boulets chauffant après incorporation de 1200 ppm de solution de polymère, exprimé en % massique sec par rapport au poids de ciment, aux matériaux avant broyage. Le broyage a été effectué à 105°C en ajustant le nombre de tours pour atteindre une finesse Blaine avoisinant 3500 g/cm². 5 kg de matériau sont broyés à chaque opération, la charge broyante, constituée de billes de 13 à 30 mm de diamètre, est de 60 kg. La finesse Blaine est mesurée selon la norme EN 196-6. Le pouvoir fluidifiant, appelé aussi pouvoir réducteur d'eau, du polymère mis au broyage est mesuré sur un mortier préparé selon le mode opératoire décrit page 12 du brevet Lafarge WO2011015761. L'étalement est mesuré 5 min après préparation du mortier selon la norme EN1015-3 « Détermination de la consistance d'un mortier frais avec une table à secousses » : plus l'étalement est important, plus le pouvoir fluidifiant du polymère est grand.

Le tableau 9 ci-dessous rassemble les évaluations effectuées :

**Tableau 9 : Evaluation de l'étalement pour des polymères greffés et non greffés de groupements antti-oxydants**

| | **Exemple de référence A** | **Exemple A** | **Exemple de référence B** | **Exemple B** |
|---|---|---|---|---|
| Finesse Blaine (cm²/g) | 3422 | 3492 | 3547 | 3528 |
| Nombre total de tours | 1700 | 1800 | 1600 | 1600 |
| Etalement T5 (mm) | 205 | 260 | 230 | 265 |

Les résultats montrent que l'étalement est significativement plus élevé pour les polymères greffés par un groupement anti-oxydant, selon l'invention comparé aux polymères de structure équivalente mais sans antioxydant.

Ces résultats mettent en évidence un effet favorable du fait de l'antioxydant greffé, et peut être lié à un effet protecteur des groupements anti-oxydants, permettant d'éviter la dégradation du polymère.

## Revendications

1. Polymère comprenant une chaîne principale hydrocarbonée portant des groupes carboxyliques et des chaînes polyalcoxylées, caractérisé en qu'il comporte 0.01 à 4% en poids par rapport au poids du polymère final de groupements anti-oxydants greffés à la chaîne principale.

2. Polymère selon la revendication 1, caractérisé en qu'il comporte entre 0,1 et 4% en poids de groupements anti-oxydants, par rapport au poids du polymère.

3. Polymère selon la revendication 1 ou 2, caractérisé en que les groupements anti-oxydants comprennent une amine aromatique.

4. Polymère selon l'une des revendications 1 à 3, **caractérisé en ce que** le groupement anti-oxydant est issu d'un composé de formule (I) suivante: 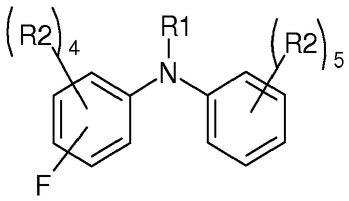 dans laquelle:
R1 est hydrogène ou une chaîne hydrocarbonée droite ou ramifiée, saturée ou insaturée, ou un ou plusieurs cycles aromatiques éventuellement condensés, comprenant 1 à 100 atomes de carbone éventuellement interrompus par un ou plusieurs hétéroatomes tels que O, S, N ou P, de préférence, R1 est hydrogène ;
R2 est identique ou différent et peut être, indépendamment les uns des autres, hydrogène ou une chaîne hydrocarbonée droite ou ramifiée, saturée ou insaturée, ou un ou plusieurs cycles aromatiques éventuellement condensés, comprenant 1 à 100 atomes de carbone, éventuellement interrompus par un ou plusieurs hétéroatomes tels que O, S, N ou P, et/ou éventuellement substitués par un ou plusieurs groupements amine, alcool, cétone, dérivé halogéné, isocyanate, acétoacétonate, silanol, ester d'acide carboxylique et d'alcool, époxyde, carbonate ou mercaptan, phosphate, phosphonate, sulfate, sulfonate ou carboxylate, de préférence, R2 est hydrogène ;
F est un groupement amine, notamment amine primaire, alcool, cétone, dérivé halogéné, isocyanate, acétoacétonate, silanol, ester d'acide carboxylique et d'alcool, époxyde, carbonate ou mercaptan lié au cycle aromatique éventuellement par une chaîne hydrocarbonée droite ou ramifiée, saturée ou insaturée comportant jusqu'à 100 atomes de carbone, de préférence, F est un groupe amine primaire.

5. Polymère selon l'une des revendications 1 à 4, **caractérisé en ce que** le groupement anti-oxydant est greffé à la chaîne principale via un groupe carboxylique, au moyen d'une liaison amide ou ester.

6. Polymère selon l'une des revendications 1 à 5, **caractérisé en ce qu'**il présente une masse molaire moyenne en poids comprise entre 1000 et 1 000 000, de préférence entre 5 000 et 110 000 (Mw).

7. Polymère selon l'une des revendications 1 à 6, sous forme de poudre.

8. Procédé de préparation d'un polymère selon l'une des revendications précédentes, comprenant l'étape de :
(i) l'estérification d'un composé polycarboxylique avec un alcoxypolyalcoxyglycol en présence d'un composé anti-oxydant susceptible de réagir dans les conditions de la réaction avec une fonction réactive portée par le composé polycarboxylique pour former une liaison covalente entre le composé polycarboxylique et le composé anti-oxydant.

9. Procédé selon la revendication 8, dans lequel l'étape (i) est réalisée en deux étapes distinctes :
(a) le mélange réactionnel est d'abord porté à une température comprise entre 50 et 95 °C et à pression réduite;
(b) la réaction est ensuite poursuivie en chauffant à une température comprise entre 100 et 200°C à pression réduite et/ou sous un flux de gaz inerte jusqu'à la fin de la réaction.

10. Procédé selon les revendications 8 ou 9, comportant en outre une étape de mise en poudre du polymère greffé obtenu.

11. Procédé selon la revendication 10, dans lequel l'étape de mise en poudre est réalisée directement à partir du polymère issu de l'étape (b).

12. Procédé selon la revendication 10, dans lequel l'étape de mise en poudre comprenant les étapes de :
- mise en solution aqueuse du polymère greffé obtenu ; et
- mise en poudre de la solution de polymère obtenue, notamment par atomisation, écaillage par film mince sur tambour ou broyage.

13. Polymère, **caractérisé en ce qu'**il est susceptible d'être obtenu par le procédé selon l'une des revendications 8 à 12.

14. Adjuvant utile à titre de dispersant de suspensions de particules minérales, comprenant le polymère selon l'une des revendications 1 à 7 ou 13.

15. Adjuvant selon la revendication 14, sous forme de solution aqueuse limpide.

16. Adjuvant selon la revendication 15, comportant 10 à 50% en poids de polymère ainsi que le cas échéant des additifs habituels.

17. Utilisation d'un polymère selon l'une des revendications 1 à 7 ou 13 pour fluidifier des suspensions de particules minérales.

18. Utilisation d'un polymère selon l'une des revendications 1 à 7 ou 13 pour réduire la demande en eau de compositions hydrauliques.

19. Utilisation selon la revendication 18, dans laquelle le polymère est ajouté sous forme liquide et/ou de poudre avant et/ou pendant le broyage d'un ciment.

## Patentansprüche

1. Polymer, das eine Kohlenwasserstoff-Hauptkette umfasst, die Carboxylgruppen und Polyalcoxyketten trägt, **dadurch gekennzeichnet, dass** es im Verhältnis zum Gewicht des Endpolymers 0,01 bis 4 Gew.-% antioxidative Gruppen aufweist, die auf die Hauptkette gepfropft sind.

2. Polymer nach Anspruch 1, **dadurch gekennzeichnet, dass** es im Verhältnis zum Gewicht des Polymers zwischen 0,1 und 4 Gew.-% antioxidative Gruppe aufweist.

3. Polymer nach Anspruch 1 oder 2, **dadurch gekennzeichnet, dass** die antioxidativen Gruppen ein aromatisches Amin umfassen.

4. Polymer nach einem der Ansprüche 1 bis 3, **dadurch gekennzeichnet, dass** die antioxidative Gruppe aus einer Verbindung der folgenden Formel (I) hervorgegangen ist: 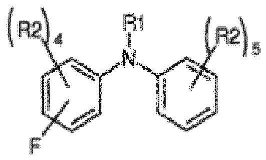 wobei:
R1 Wasserstoff oder eine gerade oder verzweigte, gesättigte oder ungesättigte Kohlenwasserstoffkette, oder ein oder mehrere, eventuell kondensierte aromatische Ringe, 1 bis 100 Kohlenstoffatome umfassend, eventuell durch ein oder mehrere Heteroatome wie O, S, N oder P unterbrochen wird, vorzugsweise, R1 Wasserstoff ist,
R2 identisch oder unterschiedlich ist und unabhängig voneinander Wasserstoff oder eine gerade oder verzweigte, gesättigte oder ungesättigte Kohlenwasserstoffkette, oder ein oder mehrere, eventuell kondensierte aromatische Ringe, 1 bis 100 Kohlenstoffatome umfassend, eventuell durch ein oder mehrere Heteroatome wie O, S, N oder P unterbrochen wird und/oder eventuell durch ein oder mehrere Amin-, Alkohol-, Ceton-, Halogenderivat-, Isocyanat-, Acetoacetonat-, Silanol-, Carboxylsäure- und Alkoholester-, Epoxyd-, Carbonat- oder Mercaptan-, Phosphat-, Phosphonat-, Sulfat-, Sulfonat- oder Carboxylatgruppen ersetzt wird, vorzugsweise, R2 Wasserstoff ist,
F eine Amin-, insbesondere eine Primäramin-, Alkohol-, Ceton-, Halogenderivat-, Isocyanat-, Acetoacetonat-, Silanol-, Carboxylsäure- und Alkoholester-, Epoxyd-, Carbonat- oder Mercaptangruppe, an den aromatischen Ring, eventuell durch eine gerade oder verzweigte, gesättigte oder ungesättigte Kohlenwasserstoffkette, 1 bis 100 Kohlenstoffatome umfassend gebunden wird, vorzugsweise, F eine primäre Amingruppe ist.

5. Polymer nach einem der Ansprüche 1 bis 4, **dadurch gekennzeichnet, dass** die antioxidative Gruppe über eine Carboxylgruppe mit hilfe von einer Amid- oder Esterbindung auf die Hauptkette gepfropft ist.

6. Polymer nach einem der Ansprüche 1 bis 5, **dadurch gekennzeichnet, dass** es eine mittlere molare Masse in Gewicht zwischen 1.000 und 1.000.000, vorzugsweise zwischen 5.000 und 110.000 (Mw), inklusive aufweist.

7. Polymer nach einem der Ansprüche 1 bis 6 in Pulverform.

8. Verfahren für die Herstellung eines Polymers nach einem der vorangehenden Ansprüche, das den Schritt umfasst:
(i) der Veresterung einer Polycarboxyverbindung mit einem Alcoxypolyalcoxyglycol in Gegenwart einer antioxidativen Verbindung, die imstande ist, unter Reaktionsbedingungen mit einer reaktiven Funktion zu reagieren, die von der Polycarboxyverbindung getragen wird, um eine kovalente Bindung zwischen der Polycarboxyverbindung und der antioxidativen Verbindung zu bilden.

9. Verfahren nach Anspruch 8, wobei der Schritt (i) in zwei unterschiedlichen Schritten durchgeführt wird:
(a) das Reaktionsgemisch wird zunächst auf eine Temperatur zwischen 50 und 95 °C inklusive und auf reduzierten Druck gebracht,
(b) die Reaktion wird dann durch Erhitzen auf eine Temperatur zwischen 100 und 200 °C inklusive bei reduziertem Druck und/oder unter einem Inertgasstrom bis zum Ende der Reaktion fortgesetzt.

10. Verfahren nach den Ansprüchen 8 oder 9, das ferner einen Schritt der Pulverisierung des erhaltenen gepfropften Polymers umfasst.

11. Verfahren nach Anspruch 10, wobei der Schritt der Pulverisierung direkt mit dem Polymer von Schritt (b) durchgeführt wird.

12. Verfahren nach Anspruch 10, wobei der Schritt der Pulverisierung die Schritte umfasst:
- Versetzen des erhaltenen gepfropften Polymers in wässrige Lösung, und
- Pulverisieren der erhaltenen Polymerlösung, vor allem durch Zerstäuben, Abblättern durch Dünnefilme auf Trommel oder Zerkleinern.

13. Polymer, **dadurch gekennzeichnet, dass** es durch das Verfahren nach einem der Ansprüche 8 bis 12 gewinnbar ist.

14. Adjuvans, das als Suspensionsdispergens mineralischer Partikel nützlich ist, das das Polymer nach einem der Ansprüche 1 bis 7 oder 13 umfasst.

15. Adjuvans nach Anspruch 14 in Form klarer wässriger Lösung.

16. Adjuvans nach Anspruch 15, das 10 bis 50 Gew.-% Polymer sowie gegebenenfalls die üblichen Zusatzstoffe aufweist.

17. Verwendung eines Polymers nach einem der Ansprüche 1 bis 7 oder 13 zum Verflüssigen von Suspensionen mineralischer Partikel.

18. Verwendung eines Polymers nach einem der Ansprüche 1 bis 7 oder 13 zur Reduzierung des Wasserbedarfs hydraulischer Zusammensetzungen.

19. Verwendung nach Anspruch 18, wobei das Polymer in flüssiger und/oder Pulverform vor und/oder während des Zerkleinerns eines Zements hinzugefügt wird.

## Claims

1. A polymer comprising a main hydrocarbon chain bearing carboxylic groups and polyalkoxylated chains, **characterized in that** it includes 0.01 to 4% by weight based on the weight of the final polymer, of anti-oxidant groups grafted to the main chain.

2. The polymer according to claim 1, **characterized in that** it includes between 0.1 and 4% by weight of anti-oxidant groups, based on the weight of the polymer.

3. The polymer according to claim 1 or 2, **characterized in that** the anti-oxidant groups comprise an aromatic amine.

4. The polymer according to one of claims 1 to 3, **characterized in that** the anti-oxidant group stems from a compound of the following formula (I): 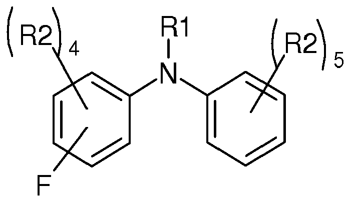 wherein:
R1 is a hydrogen or a saturated or unsaturated, linear or branched hydrocarbon chain or one or more aromatic optionally fused rings, comprising from 1 to 100 carbon atoms optionally interrupted with one or more heteroatoms such as O, S, N or P; preferably R1 is a hydrogen;
R2 is identical or different and may independently of each other, be a hydrogen or a saturated or unsaturated, linear or branched hydrocarbon chain, or one or more aromatic optionally fused rings, comprising from 1 to 100 carbon atoms, optionally interrupted with one or more heteroatoms such as O, S, N or P, and/or optionally substituted with one or more amine, alcohol, ketone, halogenated derivative, isocyanate, acetoacetonate, silanol, carboxylic acid and alcohol ester, epoxide, carbonate or mercaptan, phosphate, phosphonate, sulfate, sulfonate or carboxylate groups; preferably R2 is a hydrogen;
F is an amine group, notably a primary amine, an alcohol, ketone, halogenated derivative, isocyanate, acetoacetonate, silanol, carboxylic acid and alcohol ester, epoxide, carbonate or mercaptan group bound to the aromatic ring optionally through a saturated or unsaturated, linear or branched hydrocarbon chain including up to 100 carbon atoms; preferably F is a primary amine group.

5. The polymer according to one of claims 1 to 4, **characterized in that** the anti-oxidant group is grafted to the main chain via a carboxylic group, by means of an amide or ester bond.

6. The polymer according to one of claims 1 to 5, **characterized in that** it has a weight average molar mass comprised between 1,000 and 1,000,000, preferably between 5,000 and 110,000 (Mw).

7. The polymer according to one of claims 1 to 6, as a powder.

8. A method for preparing a polymer according to one of the preceding claims, comprising the step of:
(i) esterifying a polycarboxylic compound with an alkoxy polyalkoxyglycol in the presence of an anti-oxidant compound which may react under conditions of the reaction with a reactive function borne by the polycarboxylic compound in order to form a covalent bond between the polycarboxylic compound and the anti-oxidant compound.

9. The method according to claim 8, wherein the step (i) is carried out in two distinct steps:
(a) the reaction mixture is first brought to a temperature comprised between 50 and 95°C and under reduced pressure;
(b) the reaction is then continued by heating to a temperature comprised between 100 and 200°C under reduced pressure and/or under a flow of inert gas until the end of the reaction.

10. The method according to claims 8 or 9, further including a step for powdering the obtained grafted polymer.

11. The method according to claim 10, wherein the powdering step is directly carried out from the polymer stemming from step (b).

12. The method according to claim 10, wherein the powdering step comprises the steps of:
- putting the obtained grafted polymer in an aqueous solution; and
- powdering the obtained polymer solution, notably by atomization, flaking with a thin film on a drum or milling.

13. A polymer, **characterized in that** it is obtainable by the method according to one of claims 8 to 12.

14. An admixture useful as a plasticizer of suspensions of mineral particles comprising the polymer according to one of claims 1 to 7 or 13.

15. The admixture according to claim 14, as a limpid aqueous solution.

16. The admixture according to claim 15, comprising from 10 to 50% by weight of polymer as well as customary additives if necessary.

17. The use of a polymer according to one of claims 1 to 7 or 13 for fluidifying suspensions of mineral particles.

18. The use of a polymer according to one of claims 1 to 7 or 13 for reducing the water demand of hydraulic compositions.

19. The use according to claim 18, wherein the polymer is added in liquid form and/or as a powder before and/or during milling of a cement.
